# EUROPEAN PATENT APPLICATION

(11) **EP 4 501 694 A1**
(43) Date of publication of application: **05.02.2025**
(21) Application number: 23790965.0
(22) Date of filing: 21.03.2023
(51) Int. Cl.: B60L 53/00

(54) **METHOD AND APPARATUS FOR CONTROLLING CHARGING AND DISCHARGING CIRCUIT, AND DEVICE, SYSTEM AND STORAGE MEDIUM**

(30) Priority: 22.04.2022 CN 202210428173
(71) Applicant: Contemporary Amperex Technology Co., Limited, Ningde City, Fujian PRC 352100 (CN)
(72) Inventor: ZHAO, Yuanmiao, Ningde, Fujian 352100 (CN); HUANG, Xiaojian, Ningde, Fujian 352100 (CN); LI, Zhanliang, Ningde, Fujian 352100 (CN); YAN, Yu, Ningde, Fujian 352100 (CN); DAN, Zhimin, Ningde, Fujian 352100 (CN)
(74) Representative: Gong, Jinping
(86) International application number: PCT/CN2023/082750
(87) International publication number: WO 2023/202304

(57) **Abstract**

The present application discloses a control method, apparatus, device, and system for a charging and discharging circuit, and a storage medium. A neutral wire of a motor in the charging and discharging circuit is connected to a charging and discharging switching bridge arm group, the method including: acquiring a first current value in the neutral wire in real time during charging and discharging of a power battery by the charging and discharging circuit; and regulating the magnitude of the first current value according to the first current value, first peak current, and second peak current, where the first peak current is known peak current of the charging and discharging switching bridge arm group, and the second peak current is known peak current in the neutral wire. The control method for a charging and discharging circuit of the present application regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

## Description

### TECHNICAL FIELD

The present application relates to the technical field of batteries, and in particular to a control method, apparatus, device, and system for a charging and discharging circuit, and a storage medium.

### BACKGROUND

With the development of science and technology, power batteries have become more and more popularly used in a variety of fields, especially in electric transportation such as electric vehicles. Power batteries have advantages such as high energy density and good environmental protection effects. However, the charging and discharging power and capacity of a power battery in a low-temperature state are degraded to a large extent, so it is usually necessary to charge and discharge the power battery to realize self-heating of the power battery. The prior art lacks a regulation scheme to cope with an abnormality in the current value for charging and discharging of the power battery, and the current cannot be adjusted in a timely manner when an abnormality in the current value occurs during the charging and discharging of the power battery, resulting in easy damage to the circuit.

### SUMMARY OF THE INVENTION

In view of the above problem, the present application provides a control method, apparatus, device, and system for a charging and discharging circuit, and a storage medium, which can solve the problem in the prior art of failure to make timely adjustments to the current when an abnormality in the current value occurs during charging and discharging of a power battery, resulting in easy damage to the circuit. In order to provide a basic understanding of some aspects of the disclosed embodiments, a brief summary is given below. This summary part is not a general commentary, nor is it intended to identify key/significant constituent elements or to depict the scope of protection of these embodiments. Its sole purpose is to present some concepts in a simple form as a preamble to the detailed description that follows.

In a first aspect of embodiments of the present application, a control method for a charging and discharging circuit is provided, where a neutral wire of a motor in the charging and discharging circuit is connected to a charging and discharging switching bridge arm group, the method including:
acquiring a first current value in the neutral wire in real time during charging and discharging of a power battery by the charging and discharging circuit; and
regulating the magnitude of the first current value according to the first current value, first peak current, and second peak current;
where the first peak current is known peak current of the charging and discharging switching bridge arm group, and the second peak current is known peak current in the neutral wire.

The control method of embodiments of the present application regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

In some embodiments, said regulating the magnitude of the first current value according to the first current value, first peak current, and second peak current includes:
determining a preset safety value corresponding to the first current value according to a magnitude relationship between the first current value and all first preset values and all second preset values; and
regulating the magnitude of current for the charging and discharging to the determined preset safety value;
where each of the first preset values is less than or equal to the first peak current, and each of the second preset values is less than or equal to the second peak current; said all first preset values and said all second preset values are in one-to-one correspondence; and each of the first preset values is correspondingly provided with one preset safety value.

By setting the first preset values and the second preset values and the corresponding preset safety values, a preset safety value corresponding to the first current value is determined, thus enabling a higher accuracy in regulating the magnitude of the current for charging and discharging.

In some embodiments, said determining a preset safety value corresponding to the first current value according to a magnitude relationship between the first current value and all first preset values and all second preset values includes:
determining from all the first preset values a maximum first preset value that is less than the first current value, and determining from all the second preset values a maximum second preset value that is less than the first current value;
determining a first preset safety value corresponding to the maximum first preset value and a second preset safety value corresponding to the maximum second preset value; and
determining a smaller value in the first preset safety value and the second preset safety value and, if the two are equal, taking either of them as the smaller value, where the smaller value is the preset safety value corresponding to the first current value. By determining the smaller value in the first preset safety value and the second preset safety value as the preset safety value corresponding to the first current value, a higher degree of current safety can be ensured, thereby avoiding damage to the circuit by overcurrent.

In some embodiments, before said acquiring a first current value in the neutral wire in real time during charging and discharging of a power battery by the charging and discharging circuit, the method further includes:
receiving a request current value that is acquired and sent by a battery management system according to a current state of the power battery, where each of the preset safety values is less than or equal to the request current value. Limiting the respective preset safety values according to the request current values sent by the battery management system can ensure that the setting of the respective preset safety values is more reasonable, thereby improving the degree of safety of charging and discharging.

In some embodiments, said acquiring a first current value in the neutral wire in real time includes: receiving a first current value that is detected in real time by a current detection module. The first current value is detected in real time by the current detection module, thereby obtaining an accurate first current value.

In some embodiments, said acquiring a first current value in the neutral wire in real time includes:
receiving a current value of each of windings in the motor that is detected in real time by the current detection module; and
calculating a sum of current values of all of the windings to obtain the first current value. By detecting the current value of each winding in real time with the current detection module, and performing a summation to obtain the first current value, a higher accuracy is achieved.

In some embodiments, said adjusting the first current value to the determined preset safety value includes:
determining a charging and discharging cycle value corresponding to the determined preset safety value according to a correspondence between the preset safety value and charging and discharging cycles; and
regulating a current charging and discharging cycle to the determined charging and discharging cycle value. By regulating the current charging and discharging cycle to the determined charging and discharging cycle value, a higher regulation accuracy can be ensured.

In some embodiments, said regulating a current charging and discharging cycle includes: regulating an alternating formation frequency of a charging loop and a discharging loop. By regulating the alternating formation frequency of the charging loop and the discharging loop, a higher regulation accuracy can be ensured.

In a second aspect of embodiments of the present application, a control apparatus for a charging and discharging circuit is provided, where a neutral wire of a motor in the charging and discharging circuit is connected to a charging and discharging switching bridge arm group, the apparatus including:
a current value acquisition module for acquiring a first current value in the neutral wire in real time during charging and discharging of a power battery by the charging and discharging circuit; and
a current regulating module for regulating the magnitude of the first current value according to the first current value, first peak current, and second peak current;
where the first peak current is known peak current of the charging and discharging switching bridge arm group, and the second peak current is known peak current in the neutral wire.

The control apparatus of the second aspect can implement the control method of the first aspect, which regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

A third aspect of embodiments of the present application provides an electronic device, including: a memory, a processor, and a computer program stored on the memory and runnable on the processor, the processor executing the program to implement the control method for a charging and discharging circuit of the first aspect.

The electronic device of the third aspect can implement the control method of the first aspect, which regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

A fourth aspect of embodiments of the present application provides a control system for a charging and discharging circuit, including: a control module and a charging and discharging circuit that are interconnected, where a neutral wire of a motor in the charging and discharging circuit is connected to a charging and discharging switching bridge arm group; and the control module is used to perform the control method for a charging and discharging circuit of the first aspect.

The control system of the fourth aspect can implement the control method of the first aspect, which regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

In some embodiments, the charging and discharging switching bridge arm group includes an upper bridge arm and a lower bridge arm connected in series, a connection point of the upper bridge arm with the lower bridge arm is connected to the neutral wire.

In some embodiments, the upper bridge arm includes a first switch and a first diode connected in parallel, and the lower bridge arm includes a second switch and a second diode connected in parallel, where
a negative electrode of the first diode is connected to a positive electrode of the power battery, a positive electrode of the first diode is connected to a negative electrode of the second diode, and a positive electrode of the second diode is connected to a negative electrode of the power battery.

In some embodiments, the motor is an M-phase motor; and the charging and discharging circuit further includes an M-phase bridge arm circuit, each phase of bridge arm circuit including an upper bridge arm and a lower bridge arm connected in series; and M upper and lower bridge arm connection points of the M-phase bridge arm circuit being connected in one-to-one correspondence with windings of the M-phase motor.

In some embodiments, the charging and discharging circuit further includes a current detection module, the current detection module being connected in series between the neutral wire and the charging and discharging switching bridge arm group.

In some embodiments, the charging and discharging circuit further includes a capacitor connected in parallel with the power battery.

A fifth aspect of embodiments of the present application provides a computer-readable storage medium having a computer program stored thereon, where the program is executed by a processor to implement the control method for a charging and discharging circuit described in the first aspect.

The computer-readable storage medium of the fifth aspect can implement the control method of the first aspect, which regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

The technical solution provided in one of the aspects of the embodiments of the present application may include the following beneficial effects:

The control method for a charging and discharging circuit provided in embodiments of the present application regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

Other features and advantages of the present application will be set forth in the subsequent specification and will become apparent, in part, from the specification, or, in part, may be inferred from the specification or determined without doubt or learned by implementing embodiments of the present application.

### DESCRIPTION OF DRAWINGS

In order to more clearly illustrate the technical solutions in the embodiments of the present application or in the prior art, a brief description of the accompanying drawings that need to be used in the description of the embodiments or prior art is given below. Obviously, the accompanying drawings in the following description are only some of the embodiments recorded in the present application. For those of ordinary skill in the art, other accompanying drawings can be obtained based on these accompanying drawings without any creative work.
FIG. 1 illustrates a flowchart of a control method for a charging and discharging circuit of some implementations of the present application;
FIG. 2 illustrates a schematic diagram of a discharging loop of some implementations of the present application;
FIG. 3 illustrates a schematic diagram of a charging loop of some implementations of the present application;
FIG. 4 illustrates a flowchart of step S20 in FIG. 1;
FIG. 5 illustrates a flowchart of step S201 in FIG. 4;
FIG. 6 illustrates a structural schematic diagram of a connection of a charging and discharging circuit, a power battery, and a control module of some implementations of the present application;
FIG. 7 illustrates a structural schematic diagram of a connection of a charging and discharging circuit, a power battery, and a control module of some implementations of the present application;
FIG. 8 illustrates a structural block diagram of a control apparatus for a charging and discharging circuit of some implementations of the present application;
FIG. 9 illustrates a structural block diagram of an electronic device of some implementations of the present application; and
FIG. 10 illustrates a schematic diagram of a computer-readable storage medium of some implementations of the present application.

The realization of the purpose, functional features and advantages of the present application will be further described in conjunction with the embodiments with reference to the accompanying drawings.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of' refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

Power batteries have the advantages of high power, high energy density and good environmental protection effect, and have been widely used in new energy vehicles, consumer electronics, energy storage systems and other technical fields. The power batteries can, but are not limited to, be used in electrical apparatuses such as vehicles, ships or aircraft.

Taking electric vehicles as an example, electric vehicles powered by power batteries have the advantages of good environmental protection, low noise, low cost, and being capable of effectively promoting energy saving and emission reduction, and so on, and thus have a huge market application prospect, and contribute to the sustainable development of the economy. Due to the electrochemical characteristics of power batteries, the performance of the power batteries is greatly limited at lower temperatures, which seriously affects their use in low-temperature environments. Therefore, in order to enable normal use of a power battery, it is necessary to heat the power battery in a low temperature environment. The inventors found that, when heating a power battery in the prior art, there is a lack of solutions for handling abnormal current conditions such as excessive current during the charging and discharging process, which makes it impossible to adjust the current in a timely manner when an abnormality in the current value occurs in the process of charging and discharging the power battery, thus leading to easy damage to the circuit, and easily generating safety hazards resulting from the abnormal current conditions, resulting in a low level of safety in charging and discharging. For example, if the current value is too large and exceeds a safety threshold during the charging and discharging, it may lead to problems such as damage to the circuit, and in serious cases, may even lead to safety accidents such as a fire in the circuit, and thus there is an urgent need to solve these problems existing in the prior art.

In view of the above problems, embodiments of the present application provides a control method for a charging and discharging circuit, which regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

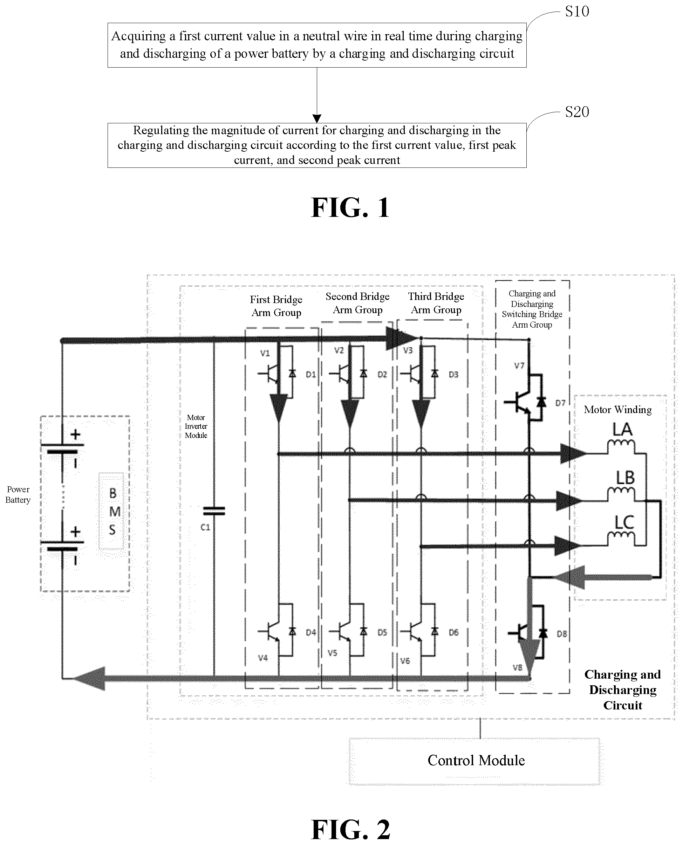

As shown in FIG. 1, an embodiment of the present application provides a control method for a charging and discharging circuit, where a neutral wire of a motor in the charging and discharging circuit is connected to a charging and discharging switching bridge arm group, and the execution body of the control method for the charging and discharging circuit may be a control module. The control module may be, for example, a controller, a processor, and the like.

In some implementations, the control method includes steps S10 to steps S20:

S 10: acquiring a first current value in the neutral wire in real time during charging and discharging of a power battery by the charging and discharging circuit.

The charging and discharging circuit may include windings of the M-phase motor as well as M bridge arm groups of the motor inverter module. M is a positive integer. The charging and discharging circuit may further include a capacitor connected in parallel with the battery. Each winding is connected to an upper and lower bridge arm connection point of a corresponding bridge arm group. M may be 3, for example, or may be another positive integer. In this embodiment, M being 3 is used as an example, i.e., windings of a three-phase motor. The first current value in the neutral wire is the charging and discharging current value of the charging and discharging loop.

The neutral wire of the windings of the M-phase motor and the upper and lower bridge arm connection points of the charging and discharging switching bridge arm groups are connected in sequence.

Among the M bridge arm groups of the motor inverter module, each bridge arm group includes an upper bridge arm and a lower bridge arm connected in series, and an upper and lower bridge arm connection point of each bridge arm group is connected to a corresponding winding in the windings of the M-phase motor.

This charging and discharging circuit may further include at least one energy storage element, the at least one energy storage element being connected in series between a first current detecting unit and the neutral wire of the windings of the M-phase motor. The energy storage element may for example be an inductor or a capacitor, or the like.

The upper bridge arm and the lower bridge arm of the charging and discharging switching bridge arm group are used to conduct or cut off upon triggering of a charging and discharging enable signal.

The upper bridge arm includes a first switch and the lower bridge arm includes a second switch; alternatively, the upper bridge arm includes a first switch and a first diode connected in parallel, and the lower bridge arm includes a second switch and a second diode connected in parallel, where
a negative electrode of the first diode is connected to a positive electrode of the power battery, a positive electrode of the first diode is connected to a negative electrode of the second diode, and a positive electrode of the second diode is connected to a negative electrode of the power battery. The power battery includes at least one battery group.

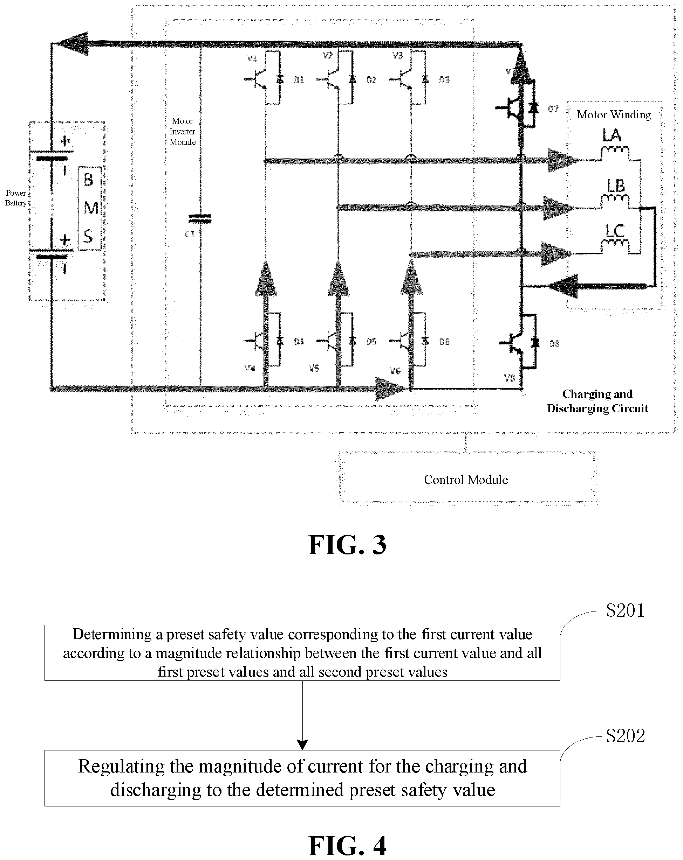

Referring to the circuit diagrams shown in FIGS. 2 and 3, V1, V2, ..., and V8 serve as switches, and components capable of functioning as switches, such as IGBT tubes, may be used; and D1, D2, ..., and D8 may all be diodes. The upper bridge arm of the charging and discharging switching bridge arm group is V7 and D7 connected in parallel, and the lower bridge arm of the charging and discharging switching bridge arm group is V8 and D8 connected in parallel.

Among the three bridge arm groups of the motor inverter module, the upper bridge arm of the first bridge arm group includes V1 and D1 connected in parallel, and the lower bridge arm of the first bridge arm group includes V4 and D4 connected in parallel; the upper bridge arm of the second bridge arm group includes V2 and D2 connected in parallel, and the lower bridge arm of the second bridge arm group includes V5 and D5 connected in parallel; and the upper bridge arm of the third bridge arm group includes V3 and D3 connected in parallel, and the lower bridge arm of the third bridge arm group includes V6 and D6 connected in parallel.

The negative electrodes of D1, D2, D3, and D7 are all connected to the positive electrode of the power battery, and the positive electrodes of D4, D5, D6, and D8 are all connected to the negative electrode of the power battery.

As shown in FIGS. 2 and 3, this charging and discharging circuit further includes a capacitor C1. The capacitor C1 can function to eliminate interference.

As shown in FIG. 2, the current flow direction of a discharging loop for discharging the power battery that is formed by this charging and discharging circuit is as follows: the positive electrode of the power battery → V1, V2, and V3 → winding LA, winding LB, and winding LC → V8 → the negative electrode of the power battery. In the discharging loop for discharging the power battery, V4, V5, and V6 are closed.

As shown in FIG. 3, the current flow direction of a charging loop for charging the power battery that is formed by this charging and discharging circuit is as follows: the negative electrode of the power battery → V4, V5, and V6 → winding LA, winding LB, and winding LC → V7 → the positive electrode of the power battery. In the charging loop, V1, V2, and V3 are closed.

S20: regulating the magnitude of the first current value according to the first current value, the first peak current, and the second peak current.

Among them, the first peak current is known peak current of the charging and discharging switching bridge arm group, and the second peak current is known peak current in the neutral wire. The known peak current of the charging and discharging switching bridge arm group and the known peak current of the neutral wire are measured and calibrated in advance.

The control method of embodiments of the present application regulates the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

As shown in FIG. 4, in some implementations, step S20 includes S201 and S202:
S201: determining a preset safety value corresponding to the first current value according to a magnitude relationship between the first current value and all first preset values and all second preset values.

The various preset safety values may be set in advance according to the actual needs, or they may be set according to other parameter conditions, for example, they may be set according to the request current value sent by the battery management system (BMS).

S202: regulating the magnitude of current for the charging and discharging to the determined preset safety value,
where each of the first preset values is less than or equal to the first peak current, and each of the second preset values is less than or equal to the second peak current; said all first preset values and said all second preset values are in one-to-one correspondence; and each of the first preset values is correspondingly provided with one preset safety value. The first preset values and the second preset values corresponding to each other correspond to the same preset safety value. By setting the first preset values and the second preset values and the corresponding preset safety values, a preset safety value corresponding to the first current value is determined, thus enabling a higher accuracy in regulating the magnitude of the current for charging and discharging. The number of the first preset values may be set according to actual needs, for example, it may be set to 3, 4, 5 or other positive integers.

In a specific example, the first peak current is denoted as I₁ and the second peak current is denoted as I₂, and 3 first preset values and 3 second preset values in one-to-one correspondence are set, where the first preset value I₁*X₁% corresponds to the second preset value I₂*Y₁%, the first preset value I₁*X₂% corresponds to the second preset value I₂*Y₂%, and the first preset value I₁*X₃% corresponds to the second preset value I₂*Y₃%, where 0≤X₁%<X₂%<X₃%≤100% and 0≤Y₁%<Y₂%<Y₃%≤100%.

For example, Xi%=50%, X₂%=70%, X₃%=90%, Y₁%=65%, Y₂%=80%, and Y₃%=95%; or X₁%=55%, X₂%=75%, X₃%=80%, Y₁%=70%, Y₂%=85%, and Y₃%=90%; or X₁%=60%, X₂%=80%, X₃%=90%, Y₁%=50%, Y₂%=75%, and Y₃%=85%; or other values, which can be specifically set according to the actual needs.

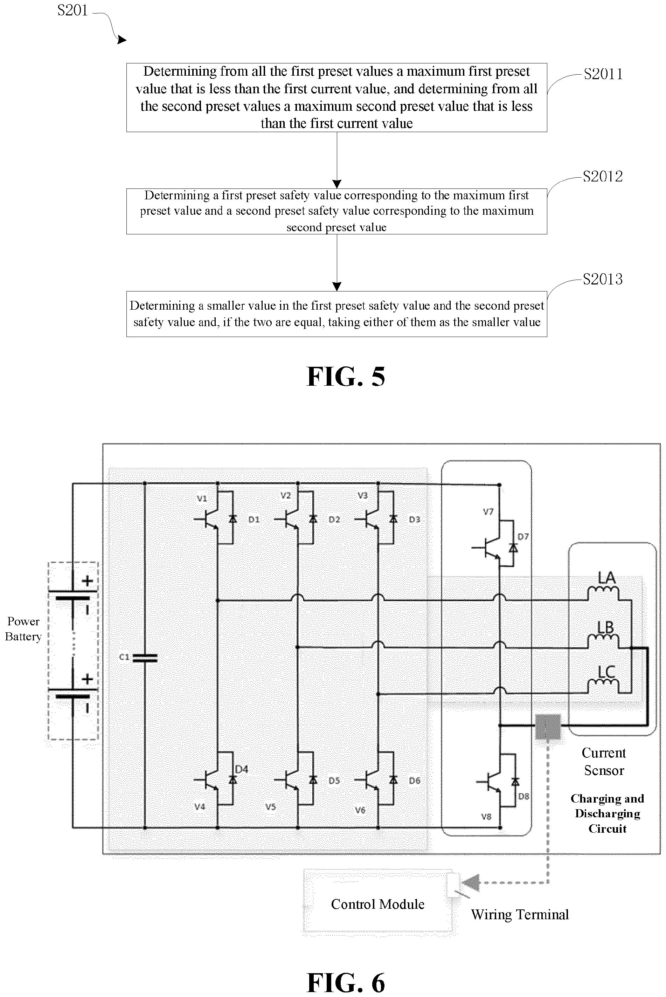

As shown in FIG. 5, in some implementations, step S201 includes steps S2011 to S2013:
S2011: determining from all the first preset values a maximum first preset value that is less than the first current value, and determining from all the second preset values a maximum second preset value that is less than the first current value.

For example, assume that there are n sequentially increasing first preset values a1, a2, a3, ..., and an, and n sequentially increasing second preset values b1, b2, b3, ..., and bn. The first current value is compared with a1, a2, a3, ..., and an to obtain a1 < a2 < a3 < ... < am < the first current value < ad, where d=m+1, then the maximum first preset value is determined to be am. The second current value is compared to b1, b2, b3, ..., and bn to obtain b1 < b2 < b3 < ... < bp < the first current value < bq, where q = p + 1, then the maximum second preset value is determined to be bp.

S2012: determining a first preset safety value corresponding to the maximum first preset value and a second preset safety value corresponding to the maximum second preset value.

A first preset safety value Sm corresponding to the maximum first preset value am and a second preset safety value Sp corresponding to the maximum second preset value bp are determined.

S2013: determining a smaller value in the first preset safety value and the second preset safety value and, if the two are equal, taking either of them as the smaller value, where the smaller value is the preset safety value corresponding to the first current value. The magnitude of current for the charging and discharging is regulated to the determined smaller value. By determining a smaller value in the first preset safety value and the second preset safety value as a preset safety value corresponding to the first current value, it can be ensured that the value of current flowing through the neutral wire is safe with respect to the neutral wire and the value of current flowing through the charging and discharging switching bridge arm group is safe with respect to the charging and discharging switching bridge arm group, which can simultaneously avoid overcurrent in the neutral wire and in the charging and discharging switching bridge arm group, and can ensure a higher degree of current safety, thus avoiding damage to the circuit by overcurrent.

The magnitudes of the first preset safety value Sm and the second preset safety value Sp are compared to determine the smaller one as the smaller value. For example, if Sm > Sp, Sp is determined to be the smaller value, and if Sm < Sp, Sm is determined to be the smaller value; and if Sm = Sp, Sm or Sp is determined to be the smaller value.

For example, in the preceding specific example, the setting may be as follows:
when Iₜ₃ > I₁*X₃% (i.e., the maximum first preset value is I₁*X₃%) or Iₜ₃ > I₂*Y₃% (i.e., the maximum second preset value is I₂*Y₃%), the corresponding preset safety value is Iₜ₃₃, then the current Iₜ₃ is adjusted to the preset safety value Iₜ₃₃ that corresponds to I₁*X₃% and I₂*Y₃%;
when I₁*X₃% ≥ Iₜ₃ > I₁*X₂% (i.e., the maximum first preset value is I₁*X₂%) or I₂*Y₃% ≥ Iₜ₃ > I₂*Y₂% (i.e., the maximum second preset value is I₂*Y₂%), the corresponding preset safety value is Iₜ₃₂, then the current Iₜ₃ is adjusted to the preset safety value Iₜ₃₂ that corresponds to X₂% and Y₂%; and
when I₁*X₂% ≥ Iₜ₃ > I₁*X₁% (i.e., the maximum first preset value is I₁*X₁%) or I₂*Y₂% ≥ Iₜ₃ > I₂*Y₁% (i.e., the maximum second preset value is I₂*Y₁%), the corresponding preset safety value is Iₜ₃₁, then the current Iₜ₃ is adjusted to the preset safety value Iₜ₃₁ that corresponds to X₁% and Y₁%.

In some implementations, before acquiring a first current value in the neutral wire in real time during charging and discharging of a power battery by the charging and discharging circuit, the method further includes:
S00: receiving a request current value that is acquired and sent by a battery management system according to a current state of the power battery, where each of the preset safety values is less than or equal to the request current value. Limiting the respective preset safety values according to the request current values sent by the battery management system can ensure that the setting of the respective preset safety values is more reasonable, thereby improving the degree of safety of charging and discharging.

The current state of the power battery may include, for example, a current state of charge (SOC) and a current temperature, or the like, and the battery management system (BMS) calculates the request current value I_{req} according to the current state of the power battery and sends I_{req} to the control module.

The predetermined safety values may, for example, be Iₜ₃₁=I_{req}*Z₁%, Iₜ₃₂=I_{req}*Z₂%, and Iₜ₃₃=I_{req}*Z₃%, where 100% ≥ Z₁% > Z₂% > Z₃%≥0. For example, Z₁%=90%, Z₂%=80%, and Z₃%=50%; or Z₁%=95%, Z₂%=85%, and Z₃%=60%; or Z₁%=85%, Z₂%=80%, and Z₃%=65%; or other values can be set according to the actual needs.

For example, when I₁*X₂% ≥ Iₜ₃ > I₁*X₁% or I₂*Y₂% ≥ Iₜ₃ > I₂*Y₁%, Iₜ₃₁=I_{req}*Z₁%;
when I₁*X₃% ≥ Iₜ₃ > I₁*X₂% or I₂*Y₃% ≥ Iₜ₃ > I₂*Y₂%, Iₜ₃₂=I_{req}*Z₂%; and
when Iₜ₃ > I₁*X₃% or Iₜ₃ > I₂*Y₃%, Iₜ₃₃=I_{req}*Z₃%.

In a specific example, X₁%=55%, X₂%=75%, X₃%=80%, Y₁%=70%, Y₂%=85%, Y₃%=90%, Z₁%=95%, Z₂%=85%, and Z₃%=60%.

In some implementations, acquiring a first current value in the neutral wire in real time includes: receiving a first current value that is detected in real time by a current detection module. The first current value is detected in real time by the current detection module, thereby obtaining an accurate first current value. The current detection module may for example be a current sensor for detecting the first current value in the neutral wire. As shown in FIG. 6, the current sensor is connected in series between the neutral wire and the upper and lower bridge arm connection point of the charging and discharging switching bridge arm group, and it detects the first current value and sends the first current value to the control module. The control module is provided with a wiring terminal for connecting the current sensor, and the interface terminal enables the current value of the current sensor to be quickly received by the control module and adjustment of the charging and discharging current to be performed according to the current value collected, thereby protecting the charging and discharging circuit. The control module may be, for example, a controller, a processor, and the like.

In some implementations, acquiring a first current value in the neutral wire in real time includes:
receiving a current value of each of windings in the motor that is detected in real time by a current detection module; and
calculating a sum of current values of all of the windings to obtain the first current value. By detecting the current value of each winding in real time with the current detection module, and performing a summation to obtain the first current value, a higher accuracy is achieved.

For example, for an M-phase motor, the current detection module includes M current sensors, and the current value of each winding of the motor is detected in real time by the current sensors, and then the sum of the current values in all the windings is calculated to obtain the first current value. Each current sensor is connected in series between a corresponding winding and a corresponding bridge arm group for use in detecting the value of current flowing through the corresponding winding.

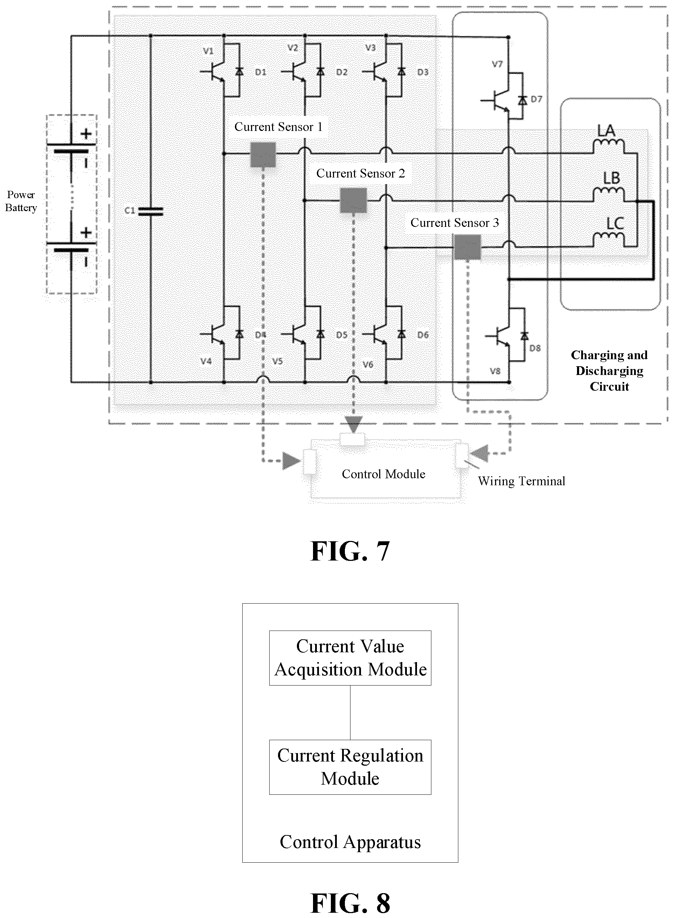

As shown in FIG. 7, the current detection module includes a current sensor 1, a current sensor 2, and a current sensor 3. The current sensor 1, the current sensor 2, and the current sensor 3 detect the current value I1 of the winding LA, the current value I2 of the winding LB, and the current value I3 of the winding LC, respectively. The first current value = I1 + I2 + I3.

As shown in FIG. 7, the control module has three interface terminals, each of which is used to connect one current sensor, and the interface terminal enables the current value of the current sensor to be quickly received by the control module and adjustment of the charging and discharging current to be performed according to the current value collected, thereby protecting the charging and discharging circuit. The control module may be, for example, a controller, a processor, and the like.

In some implementations, adjusting the first current value to the determined preset safety value includes:
determining a charging and discharging cycle value corresponding to the determined preset safety value according to a correspondence between the preset safety value and charging and discharging cycles; and
regulating a current charging and discharging cycle to the determined charging and discharging cycle value. By regulating the current charging and discharging cycle to the determined charging and discharging cycle value, a higher regulation accuracy can be ensured.

In some implementations, regulating a current charging and discharging cycle includes: regulating an alternating formation frequency of a charging loop and a discharging loop.

Controlling to shorten the charging and discharging cycle can be achieved by controlling to improve the alternating formation frequency of the charging loop and the discharging loop. By regulating the alternating formation frequency of the charging loop and the discharging loop, a higher regulation accuracy can be ensured. For example, the on-time of the charging loop is T1, and the on-time of the discharging loop is T2, and the charging and discharging cycle is T=T1+T2. Controlling to shorten the charging and discharging cycle T can be realized by shortening T1 and T2. The charging process and the discharging process are balanced, where the electrical energy of the power battery that is stored in the windings and the energy storage elements during the discharging process is all released and charged into the power battery during the charging process of the power battery.

In a specific example, the switching times of the switches V1 to V8 can be regulated at the same time so that the on-time of the switches at a fixed frequency is reduced, thereby reducing the current of the inductor. The duty cycles of V1 to V8 are reduced by control signals, where their specific values of regulation can be regulated according to the actual needs, and the duty cycles are proportional to the current values. Since the inductors are alternately charged and discharged, it is required to ensure that V1 to V8 have the same duty cycle or, by constantly regulating the duty cycles, enable 4 switches V1, V2, V3, and V8 and 4 switches V4, V5, V6, and V7 to have the same equivalent duty cycles over a period of time, thereby realizing uniform charging and discharging.

In a specific example, the current is reduced by means of regulating the duty cycles, and the current can also be reduced by means of increasing the switching tube frequencies of V1 to V8, where the higher the frequency, the lower the value of the current. Since the inductors need to be alternately charged and discharged so that V1 to V8 have the same frequency or, by constantly regulating the frequency so that 4 switching tubes V1, V2, V3, and V8 and 4 switching tubes V4, V5, V6, and V7 have the same equivalent frequency over a period of time, thereby realizing uniform charging and discharging.

In these two examples, the 4 switches V1, V2, V3, and V8 need to be regulated at the same time, and the 4 switches V4, V5, V6, and V7 need to be regulated at the same time, and the 4 switches V1, V2, V3, and V8 and the 4 switches V4, V5, V6, and V7 can be regulated with different frequencies and duty cycles as long as it is ensured that their equivalent frequencies and duty cycles are regulated so that the inductors achieve uniform charging and discharging.

During charging and discharging, the charging and discharging switching bridge arm group needs to withstand the sum of the current of the three bridge arm groups in the motor inverter module, and is therefore prone to damage due to overcurrent, so the control method of embodiments of the present application can play a good protective role for the charging and discharging switching bridge arm group by regulating the magnitude of the first current value, and can also play a good protective role for the neutral wire.

Another embodiment of the present application provides a control apparatus for a charging and discharging circuit, where a neutral wire of a motor in the charging and discharging circuit is connected to the charging and discharging switching bridge arm group, as shown in FIG. 8, the control apparatus including:
a current value acquisition module for acquiring a first current value in the neutral wire in real time during charging and discharging of a power battery by the charging and discharging circuit; and
a current regulating module for regulating the magnitude of the first current value according to the first current value, first peak current, and second peak current;

Among them, the first peak current is known peak current of the charging and discharging switching bridge arm group, and the second peak current is known peak current in the neutral wire.

In some implementations, the current regulation module includes:
a determination unit for determining a preset safety value corresponding to the first current value according to a magnitude relationship between the first current value and all first preset values and all second preset values; and
a regulation unit for regulating the magnitude of current for the charging and discharging to the determined preset safety value;
where each of the first preset values is less than or equal to the first peak current, and each of the second preset values is less than or equal to the second peak current; said all first preset values and said all second preset values are in one-to-one correspondence; and each of the first preset values is correspondingly provided with one preset safety value.

In some implementations, the determination unit includes:
a first determination sub-unit for determining from all the first preset values a maximum first preset value that is less than the first current value, and determining from all the second preset values a maximum second preset value that is less than the first current value;
a second determination sub-unit for determining a first preset safety value corresponding to the maximum first preset value and a second preset safety value corresponding to the maximum second preset value; and
a third determination sub-unit for determining a smaller value in the first preset safety value and the second preset safety value and, if the two are equal, taking either of them as the smaller value, where the smaller value is the preset safety value corresponding to the first current value.

In some implementations, this control apparatus further includes: a receiving module for receiving, before acquiring a first current value in the neutral wire in real time during charging and discharging of a power battery by the charging and discharging circuit, a request current value that is acquired and sent by a battery management system according to a current state of the power battery, where each of the preset safety values is less than or equal to the request current value.

In some implementations, the step of acquiring a first current value in the neutral wire in real time performed by the current value acquisition module includes: receiving a first current value that is detected in real time by a current detection module.

In some implementations, the step of acquiring a first current value in the neutral wire in real time performed by the current value acquisition module includes:
receiving a current value of each of windings in the motor that is detected in real time by a current detection module; and
calculating a sum of current values of all of the windings to obtain the first current value.

In some implementations, adjusting the first current value to the determined preset safety value by the regulation unit includes:
determining a charging and discharging cycle value corresponding to the determined preset safety value according to a correspondence between the preset safety value and charging and discharging cycles; and
regulating a current charging and discharging cycle to the determined charging and discharging cycle value.

Regulating a current charging and discharging cycle includes: regulating an alternating formation frequency of a charging loop and a discharging loop.

The control apparatus of embodiments of the present application can implement the control method for a charging and discharging circuit of any one of the above implementations, which can regulate the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

Another embodiment of the present application provides an electronic device including: a memory, a processor, and a computer program stored on the memory and runnable on the processor, the processor executing the program to implement the control method for a charging and discharging circuit of any one of the above embodiments.

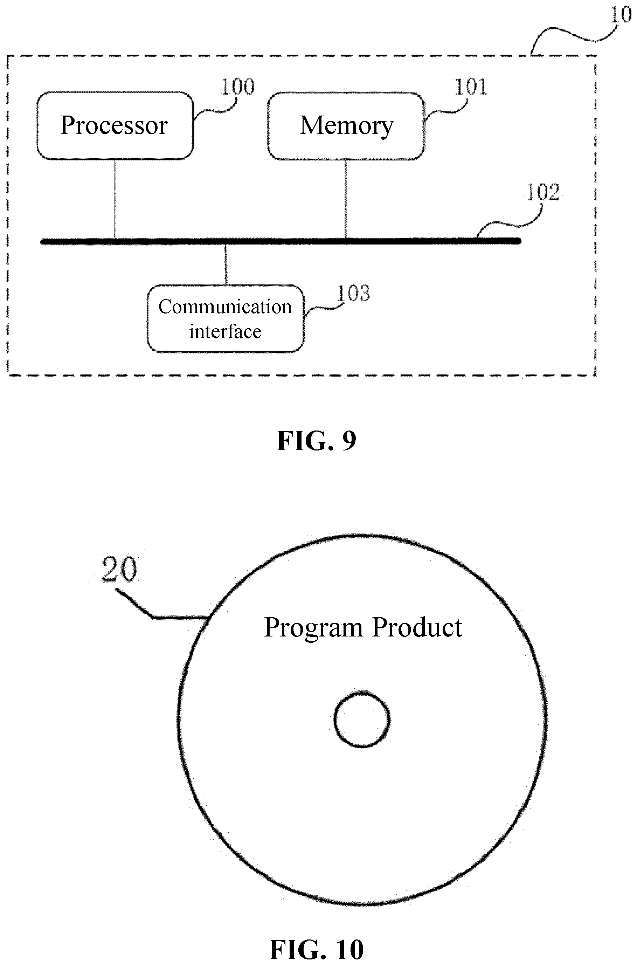

As shown in Fig. 9, an electronic device 10 may include: a processor 100, a memory 101, a bus 102, and a communication interface 103, where the processor 100, the communication interface 103, and the memory 101 are connected via the bus 102; and the memory 101 stores a computer program that is runnable on the processor 100, and the processor 100, when running the computer program, executes the method provided in any one of the preceding implementations of the present application.

Among them, the memory 101 may include a high-speed random access memory (RAM), and may also include a non-volatile memory, such as at least one disk memory. The communication connection between this system network element and at least one other network element is implemented through at least one communication interface 103 (which may be wired or wireless), which may use the Internet, a wide area network, a local network, a metropolitan area network, and the like.

The bus 102 may be an ISA bus, a PCI bus, or an EISA bus, and so on. Buses may be classified as address buses, data buses, control buses, and so on. Among them, the memory 101 is used to store a program, and the processor 100 executes the program after receiving an execution instruction, and the method disclosed in any one of the foregoing implementations of the present application may be applied in the processor 100, or implemented by the processor 100.

The processor 100 may be an integrated circuit chip with processing capabilities for signals. During implementation, the steps of the method described above may be accomplished by integrated logic circuitry in hardware in processor 100 or by instructions in the form of software. The processor 100 described above may be a general purpose processor, which may include a central processing unit (CPU), a network processor (NP), and the like; and it may also be a digital signal processor (DSP), an application specific integrated circuit (ASIC), a field programmable gate array (FPGA ) or other programmable logic devices, discrete gates or transistor logic devices, or discrete hardware components. The methods, steps, and logical block diagrams as disclosed in embodiments of the present application can be implemented or performed. The general purpose processor may be a microprocessor, or the processor may also be any conventional processor, etc. The steps of the method disclosed in conjunction with the embodiments of the present application can be directly embodied as being performed by the hardware decoding processor or being performed with a combination of hardware and software modules in the decoding processor. The software module may be located in a random access memory, a flash memory, a read-only memory, a programmable read-only memory or an electrically rewritable programmable memory, a register, and other storage media well established in the art. The storage medium is located in the memory 101, and the processor 100 reads the information in the memory 101 and completes the steps of the above method in combination with its hardware.

The electronic device provided in embodiments of the present application is motivated by the same inventive concept as the method provided in embodiments of the present application, and has the same beneficial effect as the method it employs, runs or implements.

Another embodiment of the present application provides a control system for a charging and discharging circuit, including: a control module and a charging and discharging circuit that are interconnected, where a neutral wire of a motor in the charging and discharging circuit is connected to a charging and discharging switching bridge arm group; and the control module is used perform the control method for a charging and discharging circuit of any one of the above embodiments.

The charging and discharging circuit may be, for example, a charging and discharging circuit employed in any one of the above embodiments.

In some implementations, the charging and discharging switching bridge arm group includes an upper bridge arm and a lower bridge arm connected in series, a connection point of the upper bridge arm with the lower bridge arm is connected to the neutral wire.

In some implementations, the upper bridge arm includes a first switch and a first diode connected in parallel, and the lower bridge arm includes a second switch and a second diode connected in parallel, where a negative electrode of the first diode is connected to a positive electrode of the power battery, a positive electrode of the first diode is connected to a negative electrode of the second diode, and a positive electrode of the second diode is connected to a negative electrode of the power battery.

In some implementations, the motor is an M-phase motor; and the charging and discharging circuit further includes an M-phase bridge arm circuit, M being a positive integer, each phase of bridge arm circuit including an upper bridge arm and a lower bridge arm connected in series; and M upper and lower bridge arm connection points of the M-phase bridge arm circuit being connected in one-to-one correspondence with windings of the M-phase motor.

In some implementations, the charging and discharging circuit further includes a current detection module, the current detection module being connected in series between the neutral wire and the charging and discharging switching bridge arm group.

In some implementations, the charging and discharging circuit further includes a capacitor connected in parallel with the power battery. The capacitor can function to eliminate interference.

The control system provided in embodiments of the present application can implement the control method for a charging and discharging circuit of any one of the above implementations, which can regulate the magnitude of the first current value according to the first current value in the neutral wire, the known peak current of the charging and discharging switching bridge arm group, and the known peak current of the neutral wire, and can thus timely adjust the current when an abnormality in the current value occurs during charging and discharging of the power battery, thereby avoiding damage to the circuit.

Another embodiment of the present application provides a computer-readable storage medium having a computer program stored thereon, where the program is executed by a processor to implement the control method for a charging and discharging circuit of any one of the above embodiments.

Referring to Fig. 10, the computer-readable storage medium illustrated therein is an optical disk 20 having a computer program (i.e., a program product) stored thereon, where the computer program, when run by a processor, executes the method provided by any of the foregoing implementations.

It is noted that examples of the computer-readable storage medium may also include, but not limited to, a phase-change random access memory (PRAM), a static random access memory (SRAM), a dynamic random access memory (DRAM) and other types of random access memory (RAM), a read-only memory (ROM), an electrically erasable programmable read-only memory (EEPROM), a flash memory, or other optical, magnetic storage media, which will not be repeated herein.

The computer-readable storage medium provided in the above embodiments of the present application is motivated by the same inventive concept as the method provided in the embodiments of the present application, and has the same beneficial effect as the method employed, run or implemented by the application program stored therein.

It needs to be noted that:
the term "module" is not intended to be limited to a particular physical form. Depending on the specific application, modules may be implemented as hardware, firmware, software, and/or combinations thereof. In addition, different modules may share common components or even be implemented by the same components. Clear boundaries between different modules may or may not exist.

The algorithms and displays provided herein are not inherently associated with any particular computer, virtual apparatus, or other device. Various generic devices may also be used with the examples based herein. The structure required to construct such devices is obvious in light of the above description. Furthermore, the present application is not directed to any particular programming language. It should be understood that a variety of programming languages may be utilized to implement the contents of the present application as described herein, and that the description above of particular languages is intended to disclose the best implementations of the present application.

It should be understood that although the individual steps in the flowcharts of the accompanying drawings are shown sequentially as indicated by the arrows, these steps are not necessarily performed sequentially in the order indicated by the arrows. Unless explicitly stated herein, these steps are performed in no strict order, and they can be performed in any other order. Moreover, at least some of the steps in the flowcharts of the accompanying drawings may include a plurality of sub-steps or a plurality of phases, which are not necessarily executed to completion at the same moment, but may be executed at different moments, and the order of their execution is not necessarily sequential, but may be executed in rotation or alternately with other steps or at least some of the sub-steps or phases of other steps.

The embodiments described above only express implementations of the present application, which are described in a more specific and detailed manner, but should not to be construed as a limitation of the scope of the patent of the present application as a result. It should be noted that those of ordinary skill in the art may further make variations and improvements without departing from the concept of the present application, all of which fall within the scope of protection of the present application. Therefore, the scope of protection of the present application shall be subject to the appended claims.

## Claims

1. A control method for a charging and discharging circuit, wherein a neutral wire of a motor in the charging and discharging circuit is connected to a charging and discharging switching bridge arm group, the method comprising:
acquiring a first current value in the neutral wire in real time during charging and discharging of a power battery by the charging and discharging circuit; and
regulating the magnitude of the first current value according to the first current value, first peak current, and second peak current;
wherein the first peak current is known peak current of the charging and discharging switching bridge arm group, and the second peak current is known peak current in the neutral wire.

2. The method according to claim 1, wherein said regulating the magnitude of the first current value according to the first current value, first peak current, and second peak current comprises:
determining a preset safety value corresponding to the first current value according to a magnitude relationship between the first current value and all first preset values and all second preset values; and
regulating the magnitude of current for the charging and discharging to the determined preset safety value,
wherein each of the first preset values is less than or equal to the first peak current, and each of the second preset values is less than or equal to the second peak current; said all first preset values and said all second preset values are in one-to-one correspondence; and each of the first preset values is correspondingly provided with one preset safety value.

3. The method according to claim 2, wherein said determining the preset safety value corresponding to the first current value according to the magnitude relationship between the first current value and all the first preset values and all the second preset values comprises:
determining from all the first preset values a maximum first preset value that is less than the first current value, and determining from all the second preset values a maximum second preset value that is less than the first current value;
determining a first preset safety value corresponding to the maximum first preset value and a second preset safety value corresponding to the maximum second preset value; and
determining a smaller value in the first preset safety value and the second preset safety value and, if the two are equal, taking either of them as the smaller value, wherein the smaller value is the preset safety value corresponding to the first current value.

4. The method according to claim 1, wherein
before said acquiring the first current value in the neutral wire in real time during charging and discharging of the power battery by the charging and discharging circuit, the method further comprises:
receiving a request current value that is acquired and sent by a battery management system according to a current state of the power battery, wherein each of the preset safety values is less than or equal to the request current value.

5. The method according to claim 1, wherein said acquiring the first current value in the neutral wire in real time comprises: receiving the first current value that is detected in real time by a current detection module.

6. The method according to claim 1, wherein said acquiring the first current value in the neutral wire in real time comprises:
receiving a current value of each of windings in the motor that is detected in real time by the current detection module; and
calculating a sum of current values of all of the windings to obtain the first current value.

7. The method according to any one of claims 1-6, wherein said adjusting the first current value to the determined preset safety value comprises:
determining a charging and discharging cycle value corresponding to the determined preset safety value according to a correspondence between the preset safety value and charging and discharging cycles; and
regulating a current charging and discharging cycle to the determined charging and discharging cycle value.

8. The method according to claim 7, wherein said regulating the current charging and discharging cycle comprises: regulating an alternating formation frequency of a charging loop and a discharging loop.

9. A control apparatus for a charging and discharging circuit, wherein a neutral wire of a motor in the charging and discharging circuit is connected to a charging and discharging switching bridge arm group, the apparatus comprising:
a current value acquisition module for acquiring a first current value in the neutral wire in real time during charging and discharging of a power battery by the charging and discharging circuit; and
a current regulating module for regulating the magnitude of the first current value according to the first current value, first peak current, and second peak current;
wherein the first peak current is known peak current of the charging and discharging switching bridge arm group, and the second peak current is known peak current in the neutral wire.

10. An electronic device, comprising: a memory, a processor, and a computer program stored on the memory and runnable on the processor, the processor executing the program to implement the control method for a charging and discharging circuit according to any one of claims 1-8.

11. A control system for a charging and discharging circuit, comprising a control module and a charging and discharging circuit that are interconnected, wherein a neutral wire of a motor in the charging and discharging circuit is connected to a charging and discharging switching bridge arm group; and the control module is used to perform the control method for a charging and discharging circuit according to any one of claims 1-8.

12. The system according to claim 11, wherein the charging and discharging switching bridge arm group comprises an upper bridge arm and a lower bridge arm connected in series, a connection point of the upper bridge arm with the lower bridge arm is connected to the neutral wire.

13. The system according to claim 12, wherein the upper bridge arm comprises a first switch and a first diode connected in parallel, and the lower bridge arm comprises a second switch and a second diode connected in parallel, wherein
a negative electrode of the first diode is connected to a positive electrode of the power battery, a positive electrode of the first diode is connected to a negative electrode of the second diode, and a positive electrode of the second diode is connected to a negative electrode of the power battery.

14. The system according to any one of claims 11-13, wherein the motor is an M-phase motor; and the charging and discharging circuit further comprises an M-phase bridge arm circuit, each phase of bridge arm circuit comprising an upper bridge arm and a lower bridge arm connected in series; and M upper and lower bridge arm connection points of the M-phase bridge arm circuit being connected in one-to-one correspondence with windings of the M-phase motor.

15. The system according to any one of claims 11-13, wherein the charging and discharging circuit further comprises a current detection module, the current detection module being connected in series between the neutral wire and the charging and discharging switching bridge arm group.

16. The system according to any one of claims 11-13, wherein the charging and discharging circuit further comprises a capacitor connected in parallel with the power battery.

17. A computer-readable storage medium having a computer program stored thereon, wherein the program is executed by a processor to implement the control method for a charging and discharging circuit according to any one of claims 1-8.
